# EUROPÄISCHE PATENTSCHRIFT

(11) **EP 1 437 518 B1**
(45) Veröffentlichungstag und Bekanntmachung des Hinweises auf die Patenterteilung: **02.07.2014**
(21) Anmeldenummer: 03011385.6
(22) Anmeldetag: 20.05.2003
(51) Int. Cl.: F16C 35/07

(54) **Lageranordnung**
Bearing assembly
Arrangement de paliers

(30) Priorität: 10.01.2003 DE 10300611
(43) Veröffentlichungstag der Anmeldung: 14.07.2004
(73) Patentinhaber: Geräte- und Pumpenbau GmbH, Dr. Eugen Schmidt, 98673 Merbelsrod (DE)
(72) Erfinder: Schmidt, Eugen, Dr., 98673 Merbelsrod (DE); Blaurock, Frank, 98553 Schleusingerneundorf (DE)

(56) Entgegenhaltungen:
- CH-A- 368 345
- DE-A- 2 746 071
- DE-A- 3 146 137
- DE-C- 10 131 792
- GB-A- 894 894
- US-A- 2 700 581
- US-A- 3 451 736
- US-A- 4 696 587
- PATENT ABSTRACTS OF JAPAN vol. 015, no. 407 (M-1169), 17. Oktober 1991 (1991-10-17) & JP 03 168413 A (TOSHIBA CORP), 22. Juli 1991 (1991-07-22)

## Beschreibung

Die Erfindung betrifft eine Lageranordnung für Pumpenlager in an Kunststoffgehäusen für Kühlmittelpumpen.

Im Stand der Technik sind Kühlmittelpumpen mit Kunststoffgehäusen vorbeschrieben.
Das Pumpenlager wird bei diesen Bauformen vor dem Spritzgießen im Spritzgießwerkzeug positioniert und während des Spritzgießen lagesicher im Kunststoffgehäuse integriert.
Diese Variante der Lagerbefestigung hat die Nachteile, daß das Pumpenlager während des Spritzgießens Temperaturen von bis zu 400 °C ausgesetzt wird und dadurch thermisch sehr hoch belastet wird.
Während des Abkühlvorganges werden die Lagerhülsen dann im Kunststoff radial verspannt und dabei oftmals sogar deformiert.
In nachgelagerten Arbeitsgängen müssen die Lager dann eingefettet und abgedichtet werden.
Neben einem damit verbundenen erhöhten Fertigungs- und Montageaufwand haben die Kunststoffkühlmittelpumpen mit eingespritzten Pumpenlager den weiteren Nachteil, daß die als Pumpenlager zum Einsatz kommenden Lager, infolge der technologisch bedingten Verspannung des Außenringes im Kunststoff, ein relativ großes Lagerspiel aufweisen müssen.
Dieses hohe Lagerspiel hat zwangsläufig einen großen "Wellenschlag" zur Folge, welcher die vom Wellendichtring zu übernehmende Wellenabdichtung erschwert, den Montageaufwand erhöht, die Lebensdauer des Lagers reduziert, und zudem erhöhte Laufgeräusche hervorbringt.
Ein anderer Nachteil von Kühlmittelpumpen mit im Kunststoffgehäuse eingespritzter Lagerung besteht darin, daß diese Kunststoffgehäuse infolge der integrierten Pumpenlager nicht getempert werden können, so dass die Kunststoffe gegenüber getemperten Kunststoffen zwangsläufig eine niedrigere Festigkeit aufweisen.

Darüber hinaus ist das Recycling von Kunststoffgehäusen mit eingespritzten Pumpenlagern sehr kostenaufwendig, da die Trennung der eingespritzten Lager vom Kunststoff des Gehäuses zwangsläufig einen erhöhten Zeit- und/oder Arbeitsaufwand erfordert.

Andererseits sind im Stand der Technik Lageranordnungen in Kunststoffgehäusen von Kühlmittelpumpen vorbeschrieben, bei denen die gesamte Mantelfläche des Pumpenlagers im zugehörigen Kunststoffgehäuse eingeklebt ist.

Dabei werden durch den zur Übertragung der axialen Lagerbelastungen erforderlichen Klebespalt zwischen dem Kunststoffgehäuse und dem Lageraußenmantel Fertigungs- und Montagetoleranzen vorgegebenen welche die Dichtspaltgeometrie zwischen dem Pumpenrad und der zugeordneten Gehäusebohrung und damit den Leckagestrom als wesentliche Einflußgröße für den Wirkungsgrad der Kühlmittelpumpe negativ beeinflussen, so daß mit vertretbarem Fertigungs- und/oder Montageaufwand bei Kühlmittelpumpen mit eingeklebten Pumpenlagern entweder nur geringe axiale Lagerbelastungen auf das Pumpengehäuse übertragen können, oder die Kühlmittelpumpen dann einen zwangsläufig niedrigeren Wirkungsgrad aufweisen.

Eine Optimierung dieser Bauformen mit eingeklebten Pumpenlagern erfordert stets einen zusätzlichen, oftmals sehr hohen Fertigungs- und/oder Montageaufwand.

So ist aus der US-A-3,451,736 beispielsweise eine Lageranordnung bekannt, bei der im Lagersitz eine umlaufende Nut mit einer Einlassbohrung angeordnet ist, wobei Nut gemäß der Lösung nach der US-A-3,451,736 mit zwei in einem Speziallager angeordneten Rillenbändern, welche vor der Wärmebehandlung des Außenringes in das Speziallager eingewalzt werden müssen, derart kommuniziert, dass über die Einlassbohrung in den Hohlraum zwischen der Nut im Lagersitz und den Rillenbändern im Speziallager ein Kunststoffring eingegossen wird.

Dabei steht jedoch, wie bereits erwährt, ein hoher technologischer Aufwand in der Lagerfertigung (der für die Lösung nach der US - A - 3 451 736 erforderlichen Speziallager) einer kostengünstigen Lageranordnung diametral entgegen.

Der Erfindung liegt daher die Aufgabe zugrunde, eine kostengünstige, fertigungstechnisch einfach herstell- und montierbare Lageranordnung für Pumpenlager in Kunststoffgehäusen für Kühlmittelpumpen zu entwickeln, welche die vorgenannten Nachteile des Standes der Technik nicht aufweist, das Tempern der Kunststoffgehäuse ermöglicht, stets einen hohen Pumpenwirkungsgrad mit minimalem Fertigungs- und Montageaufwand gewährleistet, den Einsatz von Lager mit kleinem Lagerspiel und all den daraus resultierende Vorteilen wie einer erhöhten Lebensdauer, einer geringeren Geräuschentwicklung, einer Entlastung des Wellendichtringes u.a.m. als Pumpenlager ermöglicht, zudem stets eine hohe Axialkraftübertragung vom Pumpenlager auf das Pumpengehäuse bei optimaler Dichtspaltgeometrie gewährleistet, eine Demontage des Pumpenlagers ohne die Beschädigung des Kunststoffgehäuses ermöglicht und gleichzeitig den Aufwand für die Fertigung, die Montage, wie auch für das Recycling deutlich reduziert.

Erfindungsgemäß wird diese Aufgabe durch eine Lageranordnung insbesondere für Pumpenlager (2) in/an Kühlmittelpumpengehäusen aus Kunststoff mit axialer Lageranlage (3) nach den Merkmalen des Hauptanspruches der Erfindung gelöst u.a. ist im Kühlmittelpumpengehäuse (1) eine mit einer Einlassbohrung (7) versehene radiale Gehäuserille (8) angeordnet und an dem im Lagersitz (4) anzuordnenden Lagerring (9) eine im Endmontagezustand der Gehäuserille (8) gegenüberliegend angeordnete Lagerrille (10) eingebracht.

Erfindungswesentlich ist, daß im Kühlmittelpumpengehäuse (1) im am Umfang des Lagersitzes (4) Stege (5) mit dazwischen liegenden Nuten (6) angeordnet sind, wobei die Nuten (6) untereinander mittels der mit der Einlassbohrung (7) versehenen Gehäuserille (8) verbunden sind.

Diese Stege vereinfachen den zum Fügen erforderlichen Fertigungs- und Montageaufwand, da auf Grund der unterbrochen gestalteten Mantelfläche des Lagersitzes eine für das Lager unschädliche Vorspannung während der Montage möglich wird.

Die zwischen den Stegen eingearbeiteten Nuten erhöhen im Endmontagezustand, nach dem Ausgehärteten des Polyamids, infolge der deutlich vergrößerten Oberfläche der kraft- und formschlüssigen "Fügeverbindung" zudem die zwischen dem Gehäuse und dem Lager übertragbare Axialkraft.

Dabei wird durch die offene Anbindung der Nuten (6) an die Umgebung des Kühlmittelpumpengehäuses eine optimale Entlüftung aller Nuten und Rillen zwischen dem Gehäuse und dem Lager während des Befüllens mit Polyamid gewährleistet, wodurch eine optimale Verankerung des Lagers im Kunststoffgehäuse erzielt wird.

Ein optionales Merkmal der Erfindung besteht darin, daß die Stege (5) mit den zwischen diesen angeordneten Nuten (6) entweder in Achsrichtung gerade und/oder schräg zur Achsrichtung und/oder bogenförmig zur Achsrichtung angeordnet sein können.

Die Form der Gestaltung der Stege (5) und den zwischen den Stegen (5) angeordneten Nuten (6) dient einerseits der spielfreien Zentrierung des Lagers, vereinfacht gleichzeitig durch ein optimales Entformen beim Spritzgießen den Fertigungsprozess und ermöglicht zudem eine Erhöhung der zwischen dem Lager und dem Gehäuse übertragbaren maximalen Axialkraft.

Erfindungsgemäß wird über die Einlassbohrung (7) beispielsweise Polyamid im flüssigen Zustand in den zwischen dem Kühlmittelpumpengehäuse (1) und dem Lagering (9) von der Gehäuserille (8) und der Lagerrille(10) gebildeten Hohlraum eingebracht.

Nach dem Aushärten des Polyamids bildet sich im Hohlraum der Gehäuserille (8) und der Lagerrille (10) ein sowohl mit dem Kühlmittelpumpengehäuse (1) wie auch mit dem Lagerring (9) verbundener, eingespritzter Kunststoffring der eine kostengünstige, fertigungstechnisch einfach herstell-, montier- und demontierbare Lageranordnung für Pumpenlager in Kunststoffgehäuse für Kühlmittelpumpen, ermöglicht.

Da das Lager erst nach dem Spritzgießen mit dem Kühlmittelpumpengehäuse (1) verbunden wird, ist es auch möglich die Materialeigenschaften der Kunststoffgehäuse durch Tempern deutlich zu verbessern.

Da bei der Bemessung der Passung zwischen dem Lager und dem Lagersitz des Kühlmittelpumpengehäuse (1) lediglich Presssitze, jedoch keine Klebespaltmaße zu berücksichtigen sind, kann mit minimalem Fertigungs- und Montageaufwand eine optimale Dichtspaltgeometrie zwischen dem Pumpenrad und der Gehäusebohrung, und somit stets ein hoher Pumpenwirkungsgrad gewährleistet werden.

Da die Lager weder eingespritzt noch fest verspannt werden müssen und daher eine Deformation der äußeren Lagerringe der Pumpenlager im Kühlmittelpumpengehäuse vermieden wird, können Lager mit kleinem Lagerspiel und all den daraus resultierenden Vorteilen wie beispielsweise einer mit dem geringeren Lagerspiel verbundenen Entlastung des Wellendichtringes, einer erhöhte Lebensdauer, einer geringeren Geräuschentwicklung, u.a.m. als Pumpenlager eingesetzt werden.

Infolge des ringförmig umlaufenden über die Lagerrille (10) und die Gehäuserille (8) sowohl mit dem Lager wie auch mit dem Kühlmittelpumpengehäuse (1) verbundenen, eingespritzten Kunststoffringes können, werden selbst hohe Axialkräfte mühelos vom Pumpenlager auf das Kühlmittelpumpengehäuse (1) übertragen.

Zudem ist durch ein definiertes Brechen der Polyamidverbindung eine einfache Demontage des Pumpenlagers ohne Beschädigung des Kunststoffgehäuses möglich, so daß neben dem Aufwand für die Fertigung und die Montage auch der Aufwand für das Recycling deutlich reduziert werden kann.

Vorteilhaft ist es auch, wenn in dem mit einer Lagerrille (10) versehenem Lagerung (9) das Pumpenlager (2) und ein Weitendichtring (12) gemeinsam angeordnet sind.

In Verbindung mit den erfindungsgemäß einsetzbaren Lagern mit einem geringem Lagerspiel (Lagerluft) ist bei gemeinsamer Anordnung von Pumpenlager (2) und Wellendichtring (12) eine exakt zentrischer Lauf der Welle (21) zu realisieren, so daß der Einbau von Entlüftungsbohrungen mit den daraus resultierenden Nachteilen vermieden werden kann.

In diesem Zusammenhang ist es auch vorteilhaft, wenn auf der Welle (21) im Bereich des Wellendichtringes (12) eine Laufhülse (16) angeordnet ist, um ein "Einarbeiten" der Dichtlippen des Wellendichtringes (12) zu vermeiden. Erfindungsgemäß ist es auch, daß in oder auf dem mit einer Lagerrille (10) versehenem Lagerring (9) entweder ein Gleitlager oder ein Wälzlager angeordnet sein kann.

Weiterhin ist nach einer Ausgestaltung eine mit einer Kunststoffwelle (13) verbundene Riemenscheibe (14) drehfest mit dem Außenring eines, auf dem mit einer Lagerrille (10) versehenem Lagerring (9) angeordneten Pumpenlagers (2) verbunden, welches auf dem mit einer Einlassbohrung (7) und einer radiale Gehäuserille (8) versehenen Lagersitz (4) mit axialer Lageranlage (3) des Kühlmittelpumpengehäuses derart angeordnet ist, daß im Endmontagezustand die Lagerrille (10) der Gehäuserille (8) gegenüberliegend angeordnete ist, und der Wellendichtring (12) direkt unterhalb des Pumpenlagers (2) angeordnet ist, wobei am freien Ende der Kunststoffwelle 13 eine am Flügelrad (17) integrierte Hülse (18) angeordnet ist, die in einem im Kühlmittelpumpengehäuse (1) angeordnetem Gleitlager (19) aus Kunststoff läuft.

Diese Bauform ermöglicht neben den bereits erläuterten erfindungsgemäßen Vorteilen auch den kostengünstigen Einsatz eines einfachen einreihigen Rillenkugellagers bei optimalen Laufeigenschaften.

Weitere Einzelheiten und Merkmale der Erfindung ergeben sich aus der nachfolgenden Beschreibung der erfindungsgemäßen Ausführungsbeispiele in Verbindung mit den Ansprüchen sowie den Zeichnungen zur erfindungsgemäßen Lösung.

Nachfolgend soll die Erfindung an Hand eines Ausführungsbeispiele in Verbindung mit drei Figuren näher erläutert werden.

Dabei zeigen:
- Figur 1 :: eine mögliche Bauform der erfindungsgemäßen, Lageranordnung mit einem am Kühlmittelpumpengehäuse außen angeordnetem Pumpenlager in der Seitenansicht, im Schnitt;
- Figur 2 :: eine andere mögliche Bauform der erfindungsgemäßen, Lageranordnung mit einem im Kühlmittelpumpengehäuse innen angeordnetem Pumpenlager in der Seitenansicht, im Schnitt;
- Figur 3 :: den Schnitt bei A-A gemäß der Figur 2;
- Figur 4 :: die Bauform gemäß Figur 2 ohne Pumpenwelle und Pumpenlager in der Seitenansicht, im Schnitt;
- Figur 5 :: den Schnitt bei B-B gemäß der Figur 4;
- Figur 6 :: eine spezielle Bauform der erfindungsgemäßen, Lageranordnung mit im Kühlmittelpumpengehäuse innen angeordnetem Pumpenlager in der Seitenansicht, im Schnitt.

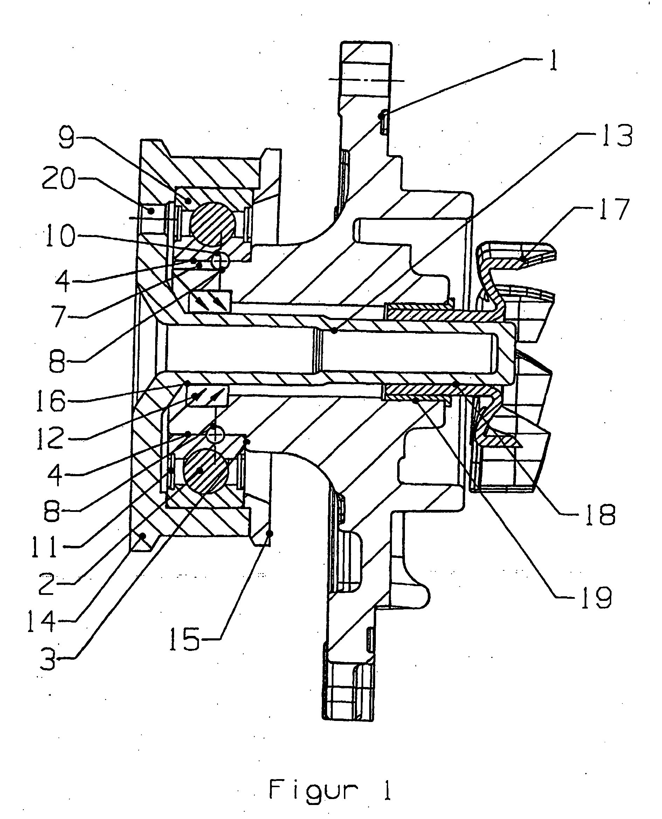

In der Figur 1 ist eine der möglichen Bauformen der erfindungsgemäßen, Lageranordnung mit einem an einem Kühlmittelpumpengehäuse 1 aus Kunststoff außen angeordnetem Pumpenlager 2 in der Seitenansicht, im Schnitt dargestellt.

Auf dem mit einer Einlassbohrung 7 und einer radiale Gehäuserille 8 versehenen Lagersitz 4 des Kühlmittelpumpengehäuses mit axialer Lageranlage 3 ist der mit einer Lagerrille 10 versehene Lagerring 9 derart angeordnet, daß im Endmontagezustand die Lagerrille 10 der Gehäuserille 8 gegenüberliegend angeordnete ist.

Erfindungsgemäß wird über die Einlassbohrung 7 Polyamid im flüssigen Zustand in den von Gehäuserille 8 und Lagerrille 10 gebildeten Hohlraum eingebracht.

Nach dem Aushärten des Polyamids bildet sich in diesem Hohlraum zwischen dem Lagersitz 4 des Gehäuses und dem Lagering 9 ein sowohl mit dem Gehäuse, wie auch mit dem Lagerring 9 verbundener Kunststoffring der eine kostengünstige, fertigungstechnisch einfach herstell- und montierbare Lageranordnung für Pumpenlager in an Kunststoffgehäuse für Kühlmittelpumpen ermöglicht.

Da das Wälzlager erst nach dem Spritzgießen mit dem Kühlmittelpumpengehäuse 1 verbunden wird, können bereits mit Dichtscheiben 11 versehenen Wälzlager montiert werden.

Zudem ist es mittels der erfindungsgemäßen Lösung vor der Montage der Wälzlager möglich die Materialeigenschaften der Kunststoffgehäuse durch Tempern deutlich zu verbessern.

An der mit einer Kunststoffinrelle 13 verbundene Riemenscheibe 14 wird nach der Montage des Außenringes des Pumpenlagers 2 ein Abdeckring 15 so angeordnet, daß dieser die Kontur der Riemenscheibe ergänzt und gleichzeitig den Außenringes des Pumpenlagers 2 fixiert.

Die erfindungsgemäße Anordnung des Pumpenlagers 2 direkt unterhalb der Wirkungslinie des Kraftangriffes der Riemenkraft gewährleistet, daß keine Biegemomente über die Kunststoffwelle 13 übertragen werden müssen. Zudem ist direkt unterhalb des Pumpenlagers 2, zwischen der Kunststoffwelle 13 und dem Kühlmittelpumpengehäuse 1, ein Wellendichtring 12 angeordnet. Infolge dieser speziellen Anordnung wird der "Wellenschlag" minimiert, wodurch eine hohe Dichtwirkung realisiert, und die Leckage minimiert werden kann.

Im Bereich des Wellendichtringes 12 ist, um ein "Einnarben" der Dichtlippen zu vermeiden, auf der Kunststoffwelle 13 eine Laufhülse 16 angeordnet.

In der Stirnseite der Riemenscheibe ist, um einen Druckausgleich am Wellendichtring zu gewährleisten, eine Entlüftungsbohrung 20 angeordnet. Am freien Ende der Kunststoffwelle 13 ist eine am Flügelrad 17 integrierte Hülse 18 angeordnet, die in einem im Kühlmittelpumpengehäuse 1 angeordnetem Gleitlager 19 aus Kunststoff läuft.

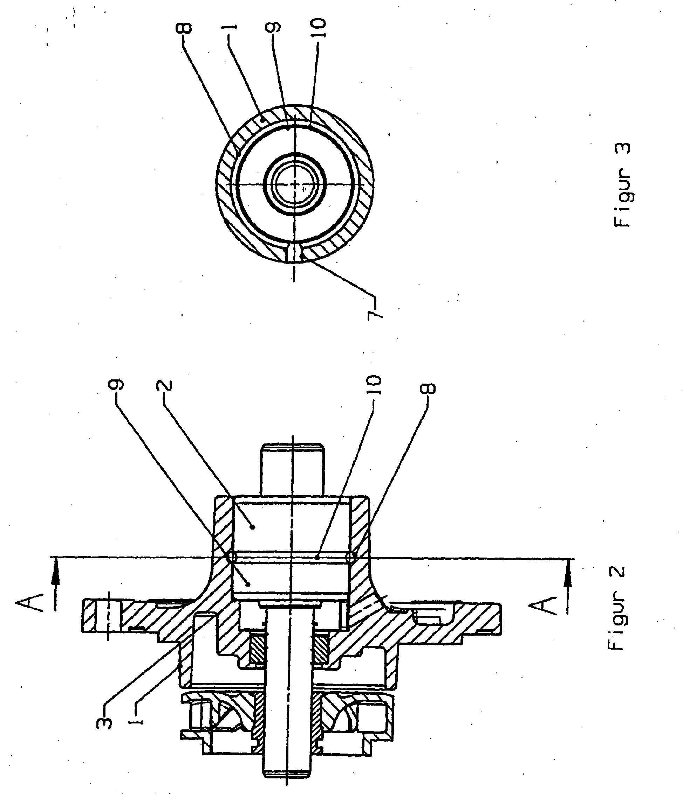

Die Figur 2 zeigt eine weitere, mögliche Bauform der erfindungsgemäßen Lageranordnung mit einem innen im Kunststoffkühlmittelpumpengehäuse 1 angeordnetem Pumpenlager 2, einer axialer Lageranlage 3 und einer mit einer Einlassbohrung versehene radiale Gehäuserille 8 in der Seitenansicht, im Schnitt dargestellt.

An dem im Lagersitz angeordnetem Lagerring 9 ist eine im Endmontagezustand der Gehäuserille 8 gegenüberliegend angeordnete Lagerrille 10 eingebracht.

Da bei dieser Bauform zur Bemessung der Passung zwischen dem Lagerring 9 und dem Lagersitz des Kühlmittelpumpengehäuses 1 lediglich Presssitze, aber keine Klebespaltmaße berücksichtigt werden müssen, kann eine optimale Dichtspaltgeometrie zwischen Pumpenrad und Gehäusebohrung und somit ein hoher Pumpenwirkungsgrad mit minimalem Fertigungs- und Montageaufwand realisiert werden.

Die Figur 3 zeigt nun den Schnitt bei A-A gemäß der Figur 2 mit der im Kühlmittelpumpengehäuse 1 angeordneten, in die radiale Gehäuserille 8 und die der Gehäuserille 8 gegenüberliegend angeordneten Lagerrille 10 mündenden Einlassbohrung 7.

Erfindungsgemäß wird über die Einlassbohrung 7 Polyamid im flüssigen Zustand in den, zwischen dem Kühlmittelpumpengehäuse 1 und dem Lagering 9, von der Gehäuserille 8 und der Lagerrille 10 gebildeten Hohlraum eingebracht.

Nach dem Aushärten des Polyamids bildet sich im Hohlraum zwischen dem Gehäuse und dem Lagering 9 ein sowohl mit dem Kühlmittelpumpengehäuse 1 wie auch mit dem Lagerring 9 verbundener, eingespritzte Kunststoffring der eine kostengünstige, fertigungstechnisch einfach herstell- und montierbare Lageranordnung für Pumpenlager in Kunststoffgehäusen für Kühlmittelpumpen ermöglicht.

Da die Lager erst nach dem Spritzgießen mit den Kühlmittelpumpengehäusen 1 verbunden werden, ist es vor der Montage der Lager möglich die Materialeigenschaften des Kunststoffes der Gehäuse durch Tempern deutlich zu verbessern.

Da die Lager nicht eingespritzt werden und somit eine Deformation der äußeren Lagerringe der Pumpenlager im Kunststoffgehäuse vermieden wird, können Lager mit kleinem Lagerspiel und all den damit verbundenen Vorteilen als Pumpenlager eingesetzt werden.

Infolge des im Endmontagezustand umlaufenden, ringförmigen über die Lagerrille 10 und die Gehäuserille 8 sowohl mit dem Lager wie auch mit dem Kühlmittelpumpengehäuse 1 verbundenen, eingespritzten Kunststoffringes können hohe Axialkräfte vom Pumpenlager 2 auf das Kühlmittelpumpengehäuse 1 übertragen werden.

Darüber hinaus ist mittels der erfindungsgemäßen Lösung eine einfache Demontage des Pumpenlagers 2 durch definiertes Brechen der Polyamidverbindung ohne eine Beschädigung des Kunststoffgehäuses der Kühlmittelpumpe möglich, so daß neben dem Aufwand für die Fertigung und die Montage auch der Aufwand für das Recycling deutlich reduziert werden kann.

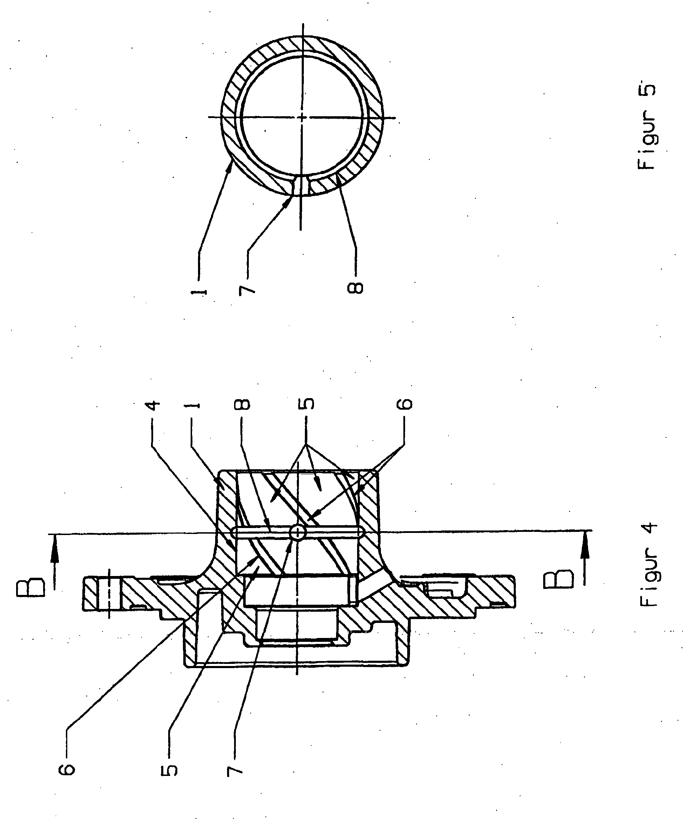

In der Figur 4 ist nun die Bauform gemäß Figur 2 ohne die Pumpenwelle mit dem Pumpenlager in der Seitenansicht, im Schnitt dargestellt.

Aus dieser Darstellung wird deutlich, daß neben der Gehäuserille 8 im Kühlmittelpumpengehäuse 1 am Umfang des Lagersitzes 4 Stege 5 mit dazwischen liegenden Nuten 6 angeordnet sind, wobei die Nuten 6 untereinander mittels der mit der Einlassbohrung 7 versehenen Gehäuserille 8 verbunden sind.

Diese zusätzlichen Stege vereinfachen nochmals den zum Fügen erforderlichen Fertigungs- und Montageaufwand, da auf Grund der unterbrochen gestalteten Mantelfläche des Lagersitzes eine für das Lager unschädliche geringe Vorspannung während der Montage möglich wird. Andererseits erhöhen die im Endmontagezustand mit ausgehärtetem Polyamid gefüllten Nuten infolge der deutlich vergrößerten Oberfläche der kraft- und formschlüssigen "Fügeverbindung" die zwischen dem Gehäuse und dem Lagerring übertragbare Axialkraft.

Gleichzeitig wird durch die offene Anbindung der Nuten 6 mit der Umgebung des Gehäuses eine optimale Entlüftung aller Nuten und Rillen zwischen Gehäuse und Lager beim Befüllen mit Polyamid gewährleistet, so daß nach dem Ausfüllen der Hohlräume und dem Aushärten des in die Hohlräume eingebrachten Polyamids eine sehr gute Verankerung des Lagers im Kunststoffgehäuse erzielt wird.

Im vorliegenden Fall sind die Stege 5 mit den zwischen diesen angeordneten Nuten 6 schräg zur Achsrichtung mit einer sehr großen Steigung angeordnet.

Die Form der Gestaltung der Stege 5 und den zwischen den Stegen 5 angeordneten Nuten 6 dient einerseits der spielfreien Zentrierung des Lagers und ermöglicht gleichzeitig ein optimales Entformen nach dem Spritzgießen des Gehäuses.

Die Figur 5 zeigt nun den Schnitt bei B-B gemäß der Figur 4 mit der im Kühlmittelpumpengehäuse 1 angeordneten, in die radiale Gehäuserille 8 mündende Einlassbohrung 7.

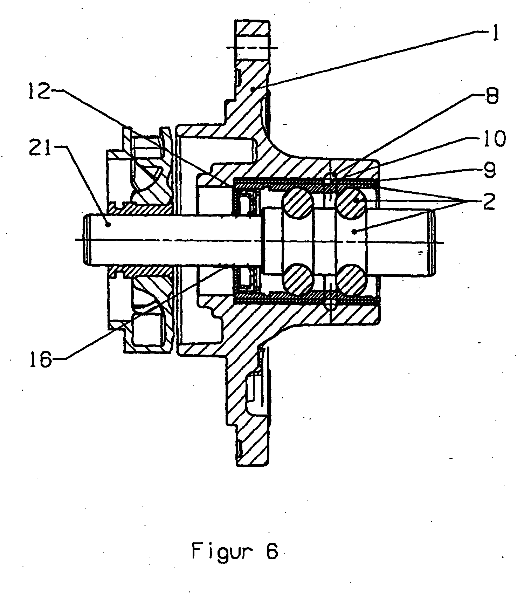

In der Figur 6 ist eine spezielle Bauform der erfindungsgemäßen Lageranordnung mit im Kühlmittelpumpengehäuse innen angeordnetem Pumpenlager in der Seitenansicht, im Schnitt dargestellt.

In dem mit einer Lagerrille 10 versehenem Lagerring 9 ist ein Pumpenlager 2 und ein Wellendichtring 12 gemeinsam angeordnet.

In Verbindung mit den erfindungsgemäß einsetzbaren Lagern mit sehr geringem Lagerspiel ist, bei gemeinsamer Anordnung des Pumpenlagers 2 und des Wellendichtringes 12 im Lagerring 9 ein sehr exakter zentrischer Lauf der Welle 21 zu realisieren, so daß der Einbau von Entlüftungsbohrungen mit den daraus resultierenden Nachteilen vermieden werden kann.

In diesem Zusammenhang ist es wiederum vorteilhaft, wenn auf der Welle 21 im Bereich des Wellendichtringes 12 eine Laufhülse 16 angeordnet ist, um ein "Einarbeiten" der Dichtlippen zu vermeiden.

Mittels der erfindungsgemäßen Lösung ist es somit gelungen, eine kostengünstige, fertigungstechnisch einfach herstell- und montierbare Lageranordnung für Pumpenlager vorzugsweise in Kunststoffgehäusen für Kühlmittelpumpen zu entwickeln, welche das Tempern der Kunststoffgehäuse ermöglicht, stets einen hohen Pumpenwirkungsgrad mit minimalem Fertigungs- und Montageaufwand gewährleistet, den Einsatz von Lager mit kleinem Lagerspiel und all den daraus resultierende Vorteilen wie einer erhöhten Lebensdauer, einer geringeren Geräuschentwicklung, einer Entlastung des Wellendichtringes u.a.m. als Pumpenlager ermöglicht, zudem stets eine hohe Axialkraftübertragung vom Pumpenlager auf das Pumpengehäuse bei optimaler Dichtspaltgeometrie gewährleistet, eine Demontage des Pumpenlagers ohne die Beschädigung des Kunststoffgehäuses ermöglicht und gleichzeitig den Aufwand für die Fertigung, die Montage, wie auch für das Recycling deutlich reduziert.

### Bezugszeichenzusammenstellung

- 1: Kühlmittelpumpengehäuse
- 2: Pumpenlager
- 3: Lageranlage
- 4: Lagersitz
- 5: Steg
- 6: Nut
- 7: Einlaßbohrung
- 8: Gehäuserille
- 9: Lagerring
- 10: Lagerrille
- 11: Dichtscheibe
- 12: Wellendichtring
- 13: Kunststoffwelle
- 14: Riemenscheibe
- 15: Abdeckring
- 16: Laufhülse
- 17: Flügelrad
- 18: Hülse
- 19: Gleitlager
- 20: Entlüftungsbohrung
- 21: Welle

## Patentansprüche

1. Lageranordnung für Pumpenlager (2) in/an Kühlmittelpumpengehäusen (1) aus Kunststoff, in einem einteiligen Lagersitz (4) mit stirnseitig axialer Lageranlage (3), wobei am/im Lagersitz (4) des Kühlmittelpumpengehäuses (1) eine mit einer Einlassbohrung (7) versehene radiale Gehäuserille (8) angeordnet ist, und an dem am/im Lagersitz (4) anzuordnenden Lagerring (9) eine im Endmontagezustand der Gehäuserille (8) gegenüberliegend angeordnete Lagerrille (10) eingebracht ist, und im Hohlraum der Gehäuserille (8) und der Lagerrille (10) ein, sowohl mit dem Kühlmittelpumpengehäuse (1), wie auch mit dem Lagerring (9) verbundener, eingespritzter Kunststoffring angeordnet ist, **dadurch gekennzeichnet, daß** im Kühlmittelpumpengehäuse (1) im/am Umfang des Lagersitzes (4) Stege (5) mit dazwischen liegenden Nuten (6) angeordnet sind, wobei die Nuten (6) untereinander mittels der mit der Einlassbohrung (7) versehenen Gehäuserille (8) verbunden sind, und der Kunststoffring sich in die zwischen dem Lager und dem Gehäuse angeordneten Nuten (6) verästelt, d.h. hinein erstreckt.

2. Verfahren zur Herstellung einer Lageranordnung von Pumpenlagern (2) in/an Kühlmittelpumpengehäusen (1) aus Kunststoff nach Anspruch 1, **dadurch gekennzeichnet, dass** über die Einlassbohrung (7) ein Polyamid im flüssigen Zustand in den von Gehäuserille (8) und Lagerrille (10) gebildeten Hohlraum sowie in die Nuten (6) eingebracht wird und dort aushärtet.

3. Lageranordnung nach Anspruch 1, **dadurch gekennzeichnet, daß** in dem mit einer Lagerrille (10) versehenem Lagerring (9) ein Pumpenlager (2) und ein Wellendichtring (12) gemeinsam angeordnet sind.

4. Lageranordnung nach Anspruch 1, **dadurch gekennzeichnet, daß** in oder auf dem mit einer Lagerrille (10) versehenem Lagerring (9) ein Gleitlager oder ein Wälzlager angeordnet ist.

5. Lageranordnung nach Anspruch 1, **dadurch gekennzeichnet, daß** eine mit einer Kunststoffwelle (13) verbundene Riemenscheibe (14) drehfest mit dem Außenring eines, auf dem mit einer Lagerrille (10) versehenem Lagerring (9) angeordneten Pumpenlagers (2) verbunden ist, welches auf dem mit einer Einlassbohrung (7) und einer radiale Gehäuserille (8) versehenen Lagersitz (4) mit axialer Lageranlage (3) des Kühlmittelpumpengehäuses derart angeordnet ist, daß im Endmontagezustand die Lagerrille (10) der Gehäuserille (8) gegenüberliegend angeordnete ist, und der Wellendichtring (12) direkt unterhalb des Pumpenlagers (2) angeordnet ist, wobei am freien Ende der Kunststoffwelle (13) eine am Flügelrad (17) integrierte Hülse (18) angeordnet ist, die in einem im Kühlmittelpumpengehäuse (1) angeordnetem Gleitlager (19) aus Kunststoff läuft.

6. Lageranordnung nach Anspruch 1, **dadurch gekennzeichnet, daß** die Stege (5) mit den zwischen diesen angeordneten Nuten (6) entweder in Achsrichtung gerade, bzw. schräg zur Achsrichtung und/oder bogenförmig zur Achsrichtung angeordnet sein können.

## Claims

1. Bearing arrangement for pump bearings (2) in/on coolant pump housings (1) of plastic, in a one-part bearing seat (4) with axial bearing support (3) on the front side, with a radial housing groove (8) with an inlet bore (7) provided on/in the bearing seat (4) of the coolant pump housing (1), and a bearing groove (10) opposing the housing groove (8) in the final assembled condition is arranged on/in the bearing seat (4) at the bearing ring (9), and an injected plastic ring is arranged in the cavity of the housing groove (8) and the bearing groove (10), which is connected both to the coolant pump housing (1) and the bearing ring (9), **characterised by** the fact that in the coolant pump housing (1) in/on the circumference of the bearing seat (4), stays (5) are arranged with grooves (6) between them, and in which the grooves (6) are connected to each other by means of the housing groove (8) provided with the inlet bore (7), and the plastic ring branches out or extends into the grooves (6) arranged between the bearing and the housing.

2. Process for the manufacture of a bearing arrangement of pump bearings (2) in/on coolant pump housings (1) of plastic in accordance with Claim 1, **characterised by** the fact that via the inlet bore (7), a polyamide in liquid condition is introduced into the cavity formed by the housing groove (8) and bearing groove (10), and into the grooves (6), where it hardens.

3. Bearing arrangement in accordance with Claim 1, **characterised by** the fact that a pump bearing (2) and a shaft sealing ring (12) are arranged together in the bearing ring (9), which is provided with a bearing groove (10).

4. Bearing arrangement in accordance with Claim 1, **characterised by** the fact that a sliding bearing or roller bearing is arranged in or on the bearing ring (9), which is provided with a bearing groove (10).

5. Bearing arrangement in accordance with Claim 1, **characterised by** the fact that a belt pulley (14) connected to a plastic shaft (13) is fixed, non-rotating, to the outer ring of a pump bearing (2) arranged on the bearing ring (9) and provided with a bearing groove (10), and which is arranged on the bearing seat (4) with axial bearing support (3) of the coolant pump housing, which is provided with an inlet bore (7) and a housing groove (8), in such a way that in the final assembled condition, the bearing groove (10) is arranged opposite the housing groove (8), and the shaft sealing ring (12) is arranged directly below the pump bearing (2), and in which a sleeve (18) integral with an impeller (17) is arranged at the free end of the plastic shaft (13), which runs in a sliding bearing (19) of plastic arranged in the coolant pump housing (1).

6. Bearing arrangement in accordance with Claim 1, **characterised by** the fact that the stays (5) with the grooves (6) arranged between them can be arranged either straight in the axial direction, or inclined to the axial direction and/or in an arched shape to the axial direction.

## Revendications

1. Arrangement de paliers pour palier de pompe (2) dans/sur des carters de pompe à réfrigérant (1) en matière plastique, dans un logement de palier (4) monobloc avec dispositif axial de palier (3) sur le côté frontal, une rainure de carter (8) radiale équipée d'une forure d'admission (7) étant disposée sur/dans le logement de palier (4) du carter de pompe à réfrigérant (1), et une gorge de palier (10) disposée en face dans l'état de montage final de la rainure de carter (8) étant placée sur la bague de palier (9) à disposer sur/dans le logement de palier (4), ainsi qu'une bague injectée en matière plastique raccordée aussi bien au carter de pompe à réfrigérant (1) qu'à la bague de palier (9) étant placée dans la cavité de rainure de carter (8) et de gorge de palier (10), **caractérisé par le fait que**, dans le carter de pompe à réfrigérant (1) dans/sur le pourtour du logement de palier (4), sont disposées des traverses (5) avec des rainures (6) placées entre, les rainures (6) étant reliées les unes avec les autres par la rainure de carter (8) pourvue de la forure d'admission (7), et que la bague en matière plastique se ramifie dans les rainures (6) disposées entre le palier et le carter, c'est-à-dire qu'elle s'étend vers l'intérieur.

2. Procédé de fabrication d'un arrangement de paliers de paliers de pompes (2) dans/sur des carters de pompe à réfrigérant (1) en matière plastique selon l'exigence 1 **caractérisé par le fait qu'**un polyamide à l'état liquide est placé au-dessus de la forure d'admission (7) dans la cavité formée par la rainure de carter (8) et la gorge de palier (10) ainsi que dans les rainures (6) pour y être durci.

3. Arrangement de paliers selon l'exigence 1 **caractérisé par le fait qu'**un palier de pompe (2) et une garniture étanche d'arbre (12) sont disposés ensemble dans la bague de palier (9) pourvue d'une gorge de palier (10).

4. Arrangement de paliers selon l'exigence 1 **caractérisé par le fait qu'**un palier de glissement ou un palier à rouleaux est disposé dans ou sur la bague de palier (9) pourvue d'une gorge de palier (10).

5. Arrangement de paliers selon l'exigence 1 **caractérisé par le fait qu'**une poulie à courroie (14) reliée à un arbre plastique (13) est reliée en étant bloquée en rotation à la bague extérieure d'un palier de pompe (2) disposé sur la bague de palier (9) pourvue d'une gorge de palier (10), lequel palier de pompe (2) est disposé sur le logement de palier (4) pourvu d'une forure d'admission (7) et d'une rainure de carter (8) radiale avec dispositif axial de palier (3) du carter de pompe à réfrigérant, cette disposition étant effectuée de telle manière que, en état de montage final, la gorge de palier (10) de rainure de carter (8) est disposée en face-à-face, et que la garniture étanche d'arbre (12) est disposée directement sous le palier de pompe (2), un manchon (18) intégré sur l'hélice (17) étant placé sur l'extrémité libre de l'arbre plastique (13), ce manchon (18) fonctionnant dans un palier de glissement (19) disposé dans le carter de pompe à réfrigérant (1).

6. Arrangement de paliers selon l'exigence 1 **caractérisé par le fait que** les traverses (5) peuvent être disposées avec les rainures (6) placées entre elles soit droites en direction de l'axe, voire inclinées par rapport à la direction de l'axe, et/soit en forme d'arc par rapport à la direction de l'axe.
